(19) Europäisches Patentamt

European Patent Office

Office européen des brevets

(11) EP 0 537 940 B1

(12) **EUROPEAN PATENT SPECIFICATION**

(45) Date of publication and mention
of the grant of the patent:
**28.01.1998   Bulletin 1998/05**

(51) Int Cl.⁶: **G11B 21/12**

(21) Application number: **92309136.7**

(22) Date of filing: **07.10.1992**

(54) **Lockable actuator device for a data storage apparatus**

Feststellbarer Tragarm in einem Plattenspeicher

Dispositif d'actuateur verrouillable pour une mémoire rotative

(84) Designated Contracting States:
**DE FR GB**

(30) Priority: **16.10.1991   JP   294882/91**

(43) Date of publication of application:
**21.04.1993   Bulletin 1993/16**

(73) Proprietor: **International Business Machines
Corporation
Armonk, N.Y. 10504 (US)**

(72) Inventors:
 • **Fukushima, Yukio
   Sagamihara-shi, Kanagawa-ken (JP)**
 • **Kimura, Junichi
   Fujisawa-shi, Kanagawa-ken (JP)**

(74) Representative: **Burt, Roger James, Dr.
IBM United Kingdom Limited
Intellectual Property Department
Hursley Park
Winchester Hampshire SO21 2JN (GB)**

(56) References cited:
   EP-A- 0 008 670          WO-A-90/03029
   US-A- 4 237 501

 • PATENT ABSTRACTS OF JAPAN vol. 7, no. 75
   (P-187)29 March 1983 & JP-A-58 006 560
 • PATENT ABSTRACTS OF JAPAN vol. 7, no. 70
   (P-185)23 March 1982 & JP-A-57 212 668

## Description

The present invention relates to devices which include a movable actuator and a fixed member with which the actuator cooperates. When the device is not operating the actuator is normally locked in a secure position so that it cannot move and be damaged or damage the fixed member. The invention relates to an apparatus and a method for unlocking an actuator from its secure position and moving it into its operating position.

The invention has a particular application in a disc storage apparatus for a data processing system. In such apparatus an actuator including a read/write transducer head is moved relative to a fixed disc on which can be stored data so that data can be written onto the disc or read from the disc. When the storage apparatus is not operating the actuator can be locked in a secure position, usually by using a permanent magnet, to prevent the head and disc from being damaged by unintentional relative movement of the disc and the actuator.

In known arrangements, in order to release the actuator from the permanent magnet, positional information (servo information) written on the fixed disc on the recording medium between a zone where the actuator is locked (parking zone) and a zone where data is recorded (data zone) is used and a seek operation is used for releasing. That is, during a releasing operation, the position of the actuator is detected by reading the positional information and the current which is supplied to the actuator is controlled. The actuator is released from the permanent magnet and moved to the data zone. A situation in which the releasing cannot be completed because of insufficient movement or in which the actuator collides with a crash stop due to the excess movement of the actuator is avoided by reading positional information on the disc.

However, the servo information written between the parking zone and the data zone on the recording disc medium may disappear due to the friction between the transducer head and the recording medium if the actuator is locked and released many times, because the parking zone is a zone on which the transducer head attached to the actuator slides when the rotational rate of the disc is below a predetermined value (contact start and stop). Once the servo information is lost, releasing cannot be completed because the positional information for the releasing cannot be obtained any more. In these known arrangements, there is therefore a problem in terms of reliability.

The object of the present invention is to provide an improved apparatus and method for unlocking an actuator from its secure position and moving it into its operating position.

WO 90/03029 discloses use of mechanical latch for locking a magnetic head support arm of a magnetic disk storage apparatus. The mechanical latch comprises a leaf spring which snaps into a predetermined locking position behind an element of the support arm. A bipolar releasing pulse (V) is applied, firstly to deflect the spring and secondly to accelerate the support arm away from the locking position before the leaf spring can spring back.

According to the invention, there is provided a data storage apparatus including an actuator controlled by a drive current for moving a transducer head relative to a data storage medium; locking means for locking said actuator in a secure position; unlocking means for unlocking said actuator and moving it from the secure position into an operating position; characterised in that said unlocking means comprises means for supplying to the actuator an accelerating drive current of a predetermined value (Ia) for a predetermined time (Ta) to move said actuator away from said locking means towards said operating position and for then supplying to the actuator a decelerating drive current of a predetermined value (Id) for a predetermined time (Td).

According to a preferred embodiment of the present invention, the actuator of a disc storage apparatus is given acceleration current for a period of acceleration time so as to release the actuator from a permanent magnet against the attraction of the magnetic force, and deceleration current for a period of deceleration time so as to stop the actuator at a data zone on the disc. When the actuator is unlocked, the actuator is driven according to the previously stored acceleration current, acceleration time, deceleration current, and deceleration time. Therefore, according to this embodiment, it is unnecessary to write positional information of the actuator between a parking zone and the data zone on a disc to release the actuator. In consequence, an unlocking apparatus or method according to the present invention can gain in reliability.

In order that the invention may be more readily understood an embodiment will now be described with reference to the accompanying drawings, in which:

Fig. 1 is a plan view of a magnetic disc storage apparatus including an actuator unlocking system according to the embodiment being described,

FIG. 2 illustrates the movement of the actuator, in which the ordinate denotes angular velocity of an actuator arm and the abscissa denotes time.

FIG. 3 illustrates the movement of the actuator, in which the ordinate denotes angles of the actuator arm and the abscissa denotes time,

FIG. 4 illustrates the value of the torque constants K of a voice coil motor used in the actuator in which the abscissa denotes rotational angles of the actuator arm from a locked position,

FIG. 5 is a graph in which the ordinate denotes magnetic force Fm of a permanent magnet and the abscissa denotes rotational angles of the actuator arm from a locked position, and

FIG. 6 is a graph in which the ordinate denotes the force Ff exerted on the actuator arm by a flexible cable attached to the actuator arm, and the abscissa denotes rotational angles of the actuator arm from a locked position.

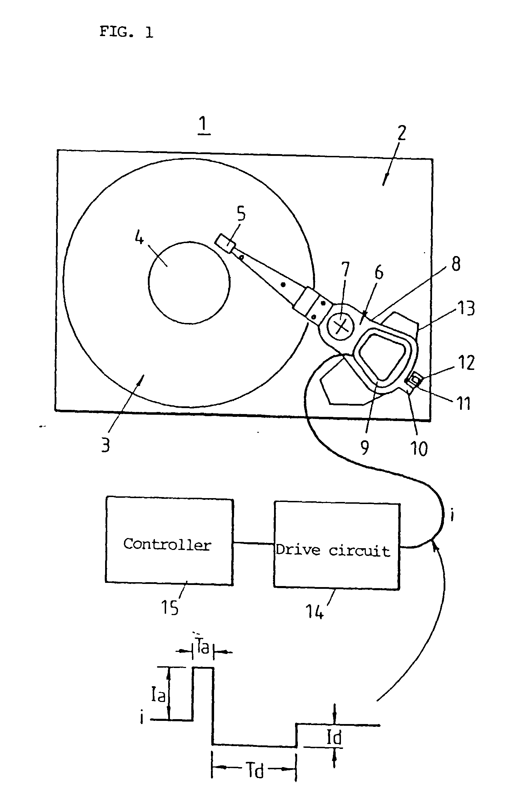

FIG. 1 shows an actuator unlocking apparatus of a disc storage apparatus. A disc storage apparatus 1 has a magnetisable recording medium in the form of a disc 3 enclosed in a housing 2, a spindle motor 4 for rotating the recording medium 3, and an actuator 6 for positioning a transducer head 5 to a desired location on the disc 3. The actuator 6 includes a rotary voice coil motor (VCM) and has an actuator arm 8 pivotally mounted about an axis 7 in the housing 2. Attached to one end of the actuator arm 8 is the transducer head 5, and attached to the other end is a coil 9. The actuator arm 8 is made of aluminium and has a protrusion 10 provided integrally at the other end to which an iron piece 11 is attached. Facing the iron piece 11 and fixed to the housing 2 is a permanent magnet 12. Within the limits of movement of the coil 9 of the actuator 6, a permanent magnet 13 of the VCM is attached to the housing 2 and rotates the actuator arm 8 around the axis 7 of rotation through interaction with the coil 9. Supplied to the coil 9 from a drive circuit 14 is drive current i. The drive current i from the drive circuit 14 is controlled by a controller 15.

The actuator arm 8 is moved to a parking zone or secure position provided adjacent to the inner circumference of the recording medium on the disc 3 while the speed of the disc 3 decreases when the disc storage apparatus 1 is powered-off. Then, the iron piece 11 is attracted to the permanent magnet 12 by magnetic force, and the actuator arm 8 is thereby locked at the inner circumference of the recording medium. The transducer head 5 lands at the parking zone and stops. In this state, even if an external force is applied, the actuator arm 8 does not move because it is locked by magnetic force, and data at a data zone on the recording medium 3 and the actuator 6 itself are protected from the unexpected movement of the transducer head 5 and the actuator arm 8.

It is necessary to release the actuator arm 8 from the permanent magnet 12 during a power-on operation of the disc storage apparatus 1. For this purpose, an acceleration drive current of value Ia is supplied to the coil 9 for an acceleration drive time of value Ta in order to overcome the attraction of the magnet 12 and to drive the actuator arm 8 toward the outer circumference of the recording medium on disc 3. The values of Ia and Ta are previously stored in the controller 15. A deceleration drive current of value Id is supplied to coil 9 for a deceleration drive time of value Td in order to decelerate and stop the actuator arm 8 released from the magnet 12 at a certain position m in a data zone (for example, the midpoint of the data zone). The values of Id and Td are also previously stored in the controller 15.

As shown in from FIG. 1 to FIG. 3, when the drive currents Ia and Id stored previously in the controller 15 are sequentially supplied to the coil 9 of the actuator 6 for times Ta and Td respectively through the drive circuit 14, the actuator arm 8 is released from the magnet 12, moved to the data zone, and stopped at the midpoint m of the data zone. It will be appreciated that if the transducer head 5 enters the data zone during the deceleration time Td the actuator arm 8 may actually be stopped at a predetermined position by reading positional (servo) information on the data zone.

The values of the acceleration drive current Ia, the acceleration time Ta, the deceleration drive current Id, and deceleration time Td can be obtained by solving an equation of motion of the actuator arm 8.
Equation of Motion:

$$M*a=K*i-Fm-Ff-Fp$$

where,

M    is rotational moment of inertia of the actuator arm 8,
a    is angular acceleration of the actuator arm 8,
K    is a torque constant of a VCM,
i    is drive current of a VCM,
Fm   is attraction torque of the permanent magnet 12,
Ff   is torque of a flexible cable which supplies the coil 9 with current,
Fp   is frictional force of the axis 7 of rotation.

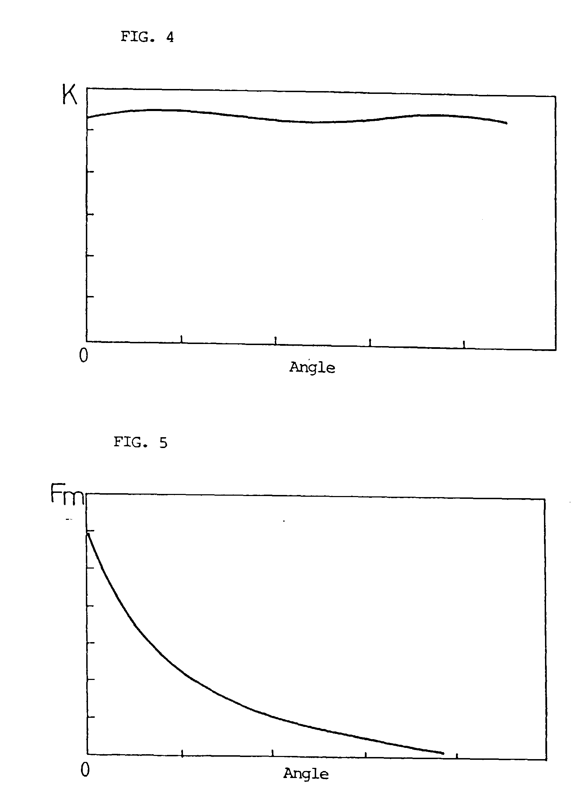

Since K, Fm, and Ff depend on the position (angle) of the actuator arm 8 as shown in FIG. 4, FIG. 5, and FIG. 6 respectively, this equation of motion can be solved by means of a well-known approximation calculation by a computer.
That is, K shown in FIG.4 is approximated to a polynomial of higher degree as follows:

$$K=a_1*x+a_2*x^2+......+a_{n1}*x^{n1}$$

Fm shown in FIG.5 is approximated to a polynomial of higher degree as follows:

$$Fm=b_1*x+b_2*x^2+.....+b_{n2}*x^{n2}$$

or

$$Fm=1/(x+b_1)+b_2$$

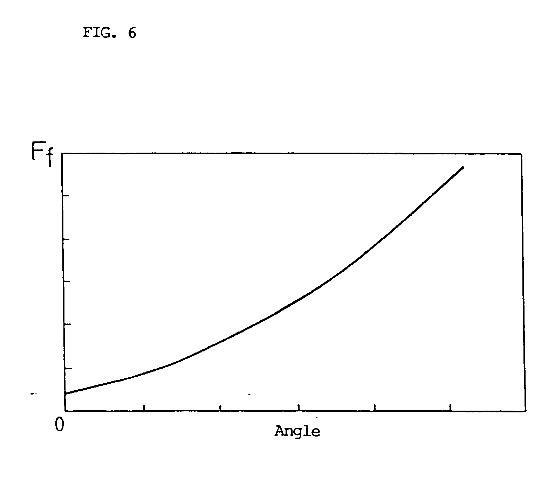

Ff shown in FIG.6 is approximated to a polynomial of higher degree as follows:

$$Ff = c_1 * x + c_2 * x^2 + \ldots + c_{n3} * x^{n3}$$

Accordingly, the equation of motion can be expressed as follows:

$$M * d^2x/dt^2 = (a_1 * x + a_2 * x^2 + \ldots + a_{n1} x^{n1}) * i$$

$$-(b_1 * x + b_2 * x^2 + \ldots + b_{n2} * x^{n2})$$

$$-(c_1 * x + c_2 * x^2 + \ldots + c_{n3} * x^{n3})$$

$$-Fp$$

where x is the rotational angle of the actuator arm 8 and angular acceleration a is $d^2x/dt^2$. This differential equation can be solved approximately by a computer.

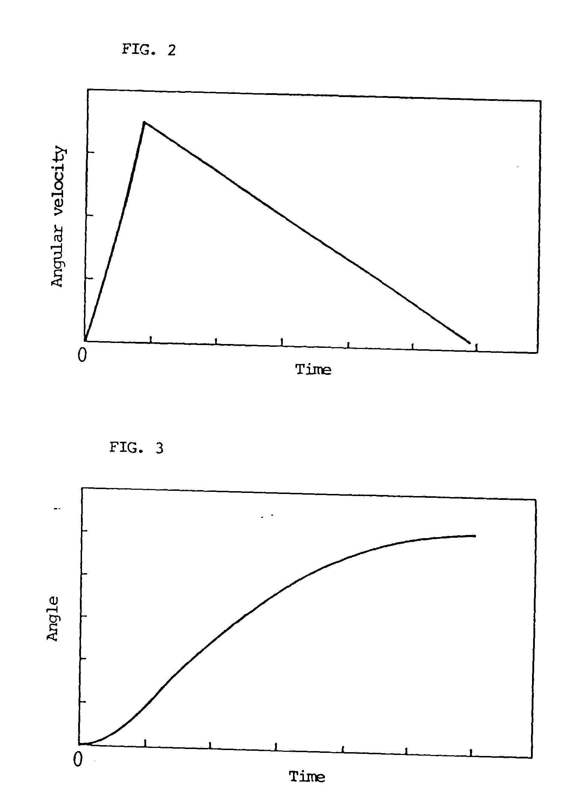

From the equation, the value of the acceleration drive current Ia, which is necessary for the actuator arm 8 to move at the appropriate angular acceleration a, can be obtained. The actuator arm 8 is accelerated for the time Ta until it reaches an appropriate velocity and position as shown in FIG.2. Then, the value of the angular deceleration, which is necessary for the actuator arm 8 to stop at a predetermined position m as shown in FIG. 3, can be obtained, and the deceleration drive current Id and deceleration time Td, which are necessary for the angular deceleration, can be obtained. Values of Ia, Id, Ta, and Td thus obtained are stored in the disc storage apparatus 1, and, when the actuator arm 8 is unlocked during a power-on operation, the controller 15 and the drive circuit 14 are controlled based on the stored values of Ia, Id, Ta, and Td.

The actuator is released from the permanent magnet lock by a previously-stored acceleration drive current applied for an acceleration time, and a deceleration drive current applied for a deceleration time. The actuator can therefore be unlocked without any positional information on a parking zone of the recording medium, where there is a possibility of disappearance of the information due to abrasion by the slide of a transducer head. Therefore, according to the arrangement described, it becomes possible to provide a more reliable unlocking apparatus as compared with the prior art.

It will be appreciated that the arrangement described may be applied not only to a rotary actuator, but also to a linear actuator. Further, it will be appreciated also that the arrangement described may be applied to any actuator other than a VCM, for example, a step motor. Still further, it will be appreciated also that the arrangement described may be applied not only to a magnetic disc storage apparatus, but also to an optical storage apparatus or a magneto-optical storage apparatus or to any other device including an actuator which moves relative to a fixed member.

## Claims

1. A data storage apparatus including:

   an actuator (5,6) controlled by a drive current for moving a transducer head relative to a data storage medium;
   locking means (10,11,12) for locking said actuator in a secure position;
   unlocking means for unlocking said actuator and moving it from the secure position into an operating position;

   characterised in that said unlocking means comprises means for supplying to the actuator an accelerating drive current of a predetermined value (Ia) for a predetermined time (Ta) to move said actuator away from said locking means towards said operating position and for then supplying to the actuator a decelerating drive current of a predetermined value (Id) for a predetermined time (Td).

2. A data storage apparatus according to claim 1, wherein said locking means comprises magnetic locking means, said accelerating drive current generating a force on the actuator which is greater than the magnetic force on the actuator of the magnetic locking means, thereby to unlock the actuator.

3. A data storage apparatus according to claim 1 or claim 2, wherein said unlocking means includes a controller (15) for storing said predetermined current values (Ia,Id) and times (Ta,Td) separately from said data storage medium.

4. A data storage apparatus according to any one of the preceding claims, wherein said unlocking means includes means for utilising positional information stored on said data storage medium to assist in stopping said actuator at a predetermined operating position.

5. An actuator device for a data storage apparatus of a data processing system, the actuator device including:

   an actuator (5,6) controlled by a drive current for moving a transducer head relative to a data storage medium;
   locking means (10,11,12) for locking said actuator in a secure position;
   unlocking means for unlocking said actuator and moving it from the secure position into an operating position;

   characterised in that said unlocking means comprises means for supplying to the actuator an accelerating drive current of a predetermined value (Ia) for a predetermined time (Ta) to move said actuator away from said locking means towards said operating position and for then supplying to the actuator a decelerating drive current of a predetermined value (Id) for a predetermined time (Td).

**Patentansprüche**

1. Eine Datenspeichervorrichtung mit

   einem durch einen Ansteuerungsstrom gesteuerten Tragarm 5, 6 zum Bewegen eines Magnetkopfes über einem Datenspeichermedium;

   Feststellmitteln 10, 11, 12 zum Feststellen des Tragarms in einer sicheren Position;

   Entriegelungsmitteln zum Entriegeln des Tragarms und zum Bewegen des Tragarms von der sicheren Position in eine Arbeitsposition;

   gekennzeichnet dadurch, daß das Entriegelungsmittel Mittel enthält, um den Tragarm eine vorgegebene Zeit Ta lang einem beschleunigenden Ansteuerungsstrom mit einem vorgegebenen Wert Ia auszusetzen, um den Tragarm vom Feststellmittel weg und auf eine Arbeitsposition zuzubewegen, und ihn dann eine vorgegebene Zeit Td lang einem abbremsenden Ansteuerungsstrom mit einem vorgegebenen Wert Id auszusetzen.

2. Eine Datenspeichervorrichtung gemäß Anspruch 1, bei der das Feststellmittel ein magnetisches Feststellmittel enthält, wobei der beschleunigende Ansteuerungsstrom eine Kraft auf den Tragarm ausübt, die stärker ist als die auf den Tragarm des magnetischen Feststellmittels einwirkende Magnetkraft, und so den Tragarm entriegelt.

3. Eine Datenspeichervorrichtung gemäß Anspruch 1 oder 2, bei der das Entriegelungsmittel eine Steuereinheit 15 zur Speicherung der vorgegebenen Stromwerte Ia, Id und Zeiten Ta, Td besitzt, die nicht mit dem Datenspeichermedium identisch ist.

4. Eine Datenspeichervorrichtung gemäß Anspruch 1 bis 3, bei der das Entriegelungsmittel Mittel zur Verwendung von auf dem Datenspeichermedium gespeicherten Positionsdaten enthält, um das Stoppen des Tragarms an einer vorgegebenen Arbeitsposition zu erleichtern.

5. Eine Tragarm-Feststellvorrichtung für eine Datenspeichervorrichtung eines Datenverarbeitungssystems, die folgende Komponenten enthält:

   einen durch einen Ansteuerungsstrom gesteuerten Tragarm 5, 6 zum Bewegen eines Magnetkopfes über einem Datenspeichermedium;

Feststellmitteln 10, 11, 12 zum Feststellen des Tragarms in einer sicheren Position;

Entriegelungsmitteln zum Entriegeln des Tragarms und zum Bewegen des Tragarms von der sicheren Position in eine Arbeitsposition;

gekennzeichnet dadurch, daß das Entriegelungsmittel Mittel enthält, um den Tragarm eine vorgegebene Zeit Ta lang einem beschleunigenden Ansteuerungsstrom mit einem vorgegebenen Wert Ia auszusetzen, um den Tragarm vom Feststellmittel weg und auf eine Arbeitsposition zuzubewegen, und ihn dann eine vorgegebene Zeit Td lang einem abbremsenden Ansteuerungsstrom mit einem vorgegebenen Wert Id auszusetzen.

**Revendications**

1. Dispositif de mémorisation de données comprenant :

   un actionneur (5,6) commandé par un courant d'attaque destiné à déplacer une tête de transducteur par rapport à un support de mémorisation de données,

   un moyen de verrouillage (10, 11, 12) destiné à verrouiller ledit actionneur à une position de sécurité,

   un moyen de déverrouillage destiné à déverrouiller ledit actionneur et à le déplacer depuis la position de sécurité jusqu'à une position fonctionnelle,

   caractérisé en ce que ledit moyen de déverrouillage comprend un moyen destiné à appliquer à l'actionneur un courant d'attaque d'accélération d'une valeur prédéterminée (Ia) pendant un intervalle de temps prédéterminé (Ta) afin de déplacer ledit actionneur en l'éloignant dudit moyen de verrouillage vers ladite position fonctionnelle et afin d'appliquer alors à l'actionneur un courant d'attaque de décélération d'une valeur prédéterminée (Id) pendant un intervalle de temps prédéterminé (Td).

2. Dispositif de mémorisation de données selon la revendication 1, dans lequel ledit moyen de verrouillage comprend un moyen de verrouillage magnétique, ledit courant d'attaque d'accélération générant une force sur l'actionneur qui est supérieure à la force magnétique sur l'actionneur du moyen de verrouillage magnétique, afin de déverrouiller ainsi l'actionneur.

3. Dispositif de mémorisation de données selon la revendication 1 ou la revendication 2, dans lequel ledit moyen de déverrouillage comprend un contrôleur (15) destiné à mémoriser lesdites valeurs de courant prédéterminées (Ia, Id) et lesdits intervalles de temps (Ta, Td) séparément dudit support de mémorisation de données.

4. Dispositif de mémorisation de données selon l'une quelconque des revendications précédentes, dans lequel ledit moyen de déverrouillage comprend un moyen destiné à utiliser des informations de position mémorisées sur ledit support de mémorisation de données afin d'aider à arrêter ledit actionneur à une position fonctionnelle prédéterminée.

5. Dispositif d'actionneur destiné à un appareil de mémorisation de données d'un système de traitement de données, le dispositif d'actionneur comprenant :

   un actionneur (5, 6) commandé par un courant d'attaque destiné à déplacer une tête de transducteur par rapport à un support de mémorisation de données,

   un moyen de verrouillage (10, 11, 12) destiné à verrouiller ledit actionneur à une position de sécurité,

   un moyen de déverrouillage destiné à déverrouiller ledit actionneur et à le déplacer à partir de la position de sécurité jusqu'à une position fonctionnelle,

   caractérisé en ce que ledit moyen de déverrouillage comprend un moyen destiné à appliquer à l'actionneur un courant d'attaque d'accélération d'une valeur prédéterminée (Ia) pendant un intervalle de temps prédéterminé (Ta) afin de déplacer ledit actionneur en l'éloignant dudit moyen de verrouillage vers ladite position fonctionnelle et afin d'appliquer alors à l'actionneur un courant d'attaque de décélération d'une valeur prédéterminée (Id) pendant un intervalle de temps prédéterminé (Td).

FIG. 1

FIG. 2

FIG. 3

FIG. 4

K

Angle

0

FIG. 5

Fm

Angle

0

FIG. 6